# FASCICULE DE BREVET EUROPEEN

(11) **EP 0 885 389 B1**
(45) Date de publication et mention de la délivrance du brevet: **22.05.2002**
(21) Numéro de dépôt: 97908318.5
(22) Date de dépôt: 07.03.1997
(51) Int. Cl.: G01N 29/28, G01N 29/26

(54) **APPAREIL DE DETECTION ACOUSTIQUE DE DEFAUTS DANS UNE BANDE EN DEFILEMENT**
VERFAHREN ZUM AKUSTISCHEN NACHWEIS VON FEHLERN EINER LAUFENDEN MATERIALBAHN
APPARATUS FOR ACOUSTIC FLAW DETECTION IN A MOVING STRIP

(30) Priorité: 08.03.1996 FR 9602913
(43) Date de publication de la demande: 23.12.1998
(73) Titulaire: SOLLAC (Société Anonyme), 92800 Puteaux (FR)
(72) Inventeur: MOUFLE, Jean-Pierre, F-95450 Seraincourt (FR); PIQUEMAL, Philippe, F-57530 Silly-sur-Nied (FR)
(74) Mandataire: Ventavoli, Roger
(86) Numéro de dépôt international: FR9700403
(87) Numéro de publication internationale: WO9733167

(56) Documents cités:
- DE-A- 1 949 586
- DE-A- 3 330 069
- FR-A- 2 570 502
- FR-A- 2 582 814

## Description

La présente invention a trait au contrôle non destructif de produits défilants, notamment une bande d'acier au cours de son processus de fabrication en sidérurgie.

Plus précisément, l'invention s'attache à la détection ultrasonore de défauts dans une telle bande en la soumettant à des ondes vibratoires guidées, par exemple des ondes dites ondes de LAMB.

Les ondes de Lamb sont des vibrations ultra sonores qui se propagent dans l'épaisseur du produit à inspecter en étant guidées par des faces planes opposées du produit. Dans le cas de produits plats comme une bande métallique, les ondes, canalisées par les deux faces planes parallèles du produit à inspecter, progressent transversalement à la direction de défilement, selon la largeur donc de la bande, depuis un endroit d'émission choisi pour l'emplacement du traducteur, jusqu'à une rive où elles se réfléchissent en produisant un signal d'écho fort. Tout défaut, une inclusion non-métallique par exemple présente au sein ou débouchant en surface de la bande lors du passage de l'onde, représente une discontinuité locale de la matière traversée qui répond par un signal dont l'intensité dépend de la taille et de la nature du défaut et dont le moment d'apparition entre l'écho d'émission et l'écho de rive est représentatif de l'endroit où se situe le défaut sur la bande.

En pratique industrielle, on met généralement en oeuvre deux traducteurs, disposés l'un à la suite de l'autre dans le sens de défilement de la bande. Chaque traducteur est placé au voisinage d'une rive différente de la bande et émet en direction de la rive opposée. De cette manière, la bande est balayée deux fois à faible intervalle de temps et dans des sens opposés, ce qui améliore la fiabilité des résultats de l'analyse, ainsi que la couverture de la zone sondée.

Selon un mode de mise en oeuvre connu auquel s'attache l'invention, le traducteur est logé à l'intérieur d'une roue creuse en matière souple, remplie d'un fluide de couplage acoustique (de l'eau en général). Cette roue palpeuse vient en contact roulant appuyé sur la bande défilante, assurant ainsi devant le traducteur une épaisseur de fluide couplant en permanence adapté à la distance qui sépare le traducteur de la bande.

Un réglage de la force d'appui de la roue est généralement prévu pour permettre un contact étroit avec la bande et réduire ainsi l'effet d'interface acoustique. Un apport externe de fluide couplant perdu à bonne propriété de mouillage, de l'huile minérale par exemple, est cependant toujours effectué entre la roue et la bande pour parfaire le couplage au niveau de cet interface. Toutefois, il semble bien que les appareils connus de ce type atteignent désormais leur limite d'utilisation. Les résultats qu'ils fournissent se dégradent vite en effet, voire deviennent inexploitables, dès que la vitesse de défilement de la bande dépasse les 100 m/mn, comme c'est le cas bien souvent dans les installations modernes.

Le but de la présente invention est de parvenir à une détection de défauts dans des produits défilants à vitesse élevée, de l'ordre de 500 ou 600 m/mn, voire d'avantage.

A cet effet, l'invention a pour objet un appareil de détection acoustique de défauts dans un produit en défilement tel qu'une bande d'acier au cours de son élaboration, comprenant au moins un traducteur ultrasonore à ondes guidées (ondes de Lamb) logé à l'intérieur d'une roue palpeuse en matière souple contenant un fluide de couplage acoustique et destinée à venir en contact roulant sur la surface du produit à inspecter, appareil caractérisé en ce qu'il présente, d'une part, un galet de contact avec la surface dudit produit placé en amont de la roue palpeuse dans la direction de défilement du produit, et, d'autre part, en amont dudit galet, une arrivée contrôlée de fluide couplant perdu sur la surface du produit défilant.

Avantageusement, le galet présente une surface de contact bien rectifiée et non déformable pour pouvoir venir en appui sur la surface du produit à inspecter. De préférence, cette surface est de largeur égale ou supérieure à celle de la roue palpeuse.

Avantageusement, le galet est constitué d'un rouleau.

Dans une forme de réalisation préférée, la roue palpeuse et son galet associé sont placés sur un chariot mobile destiné à être placé sur la surface du produit défilant à inspecter et guidé par un organe de support qui détermine sa position sur la largeur du dit produit.

Comme on l'aura sans doute déjà compris, l'invention réside pour l'essentiel dans le fait qu'un galet au contact de la surface de la bande à inspecter est placé devant la roue palpeuse contenant le capteur, et que devant ce galet un débit de fluide couplant est délivré sur la bande, dont l'étalement naturel avant le passage de la roue va être forcé et régularisé par l'action du galet. De surcroît, ce dernier, grâce à la pression qu'il exerce sur la bande, va améliorer le mouillage de la surface par une fine imprégnation des infractuosités de celle-ci qui caractérisent sa rugosité. De la sorte, se trouvent contre-carrées les velléités de formation de zones ou de mini-poches d'air à la surface de la bande néfastes à la transmission de l'énergie ultra sonore lors du passage de la roue palpeuse.

On a pu ainsi clairement établir que la qualité du mouillage à la surface du fluide couplant, préalablement au passage de la roue palpeuse, réalisé conformément à l'invention, était le facteur déterminant garantissant une détection de défauts fiable à grande vitesse de défilement. Bien entendu, la reproductivité des résultats obtenus sera également liée au maintien du fluide de couplage à viscosité, donc à température, constantes, de même qu'à épaisseur de film de fluide la plus régulière possible à la surface de la bande.

L'invention sera bien comprise et d'autres aspects et avantages apparaîtront plus clairement au vu de la description qui suit donnée à titre d'exemple en référence aux planches de dessins annexées, sur lesquelles
- la figure 1 représente une vue schématique du dessus d'un appareil de détection selon l'invention;
- la figure 2 représente une vue schématique en élévation de l'appareil.

Sur les figures, les mêmes éléments sont désignés par des références identiques.

Comme on le voit sur ces figures, une roue palpeuse 1, constituée d'un pneumatique en élastomère gonflé à l'eau, contient le traducteur ultrasonore à ondes de Lamb 2 immergé dans cette masse d'eau 3 dont la fonction est d'assurer le couplage ultrasonore entre le capteur 2 et l'enveloppe 4 de la roue.

Le traducteur 2 utilisé peut être de type piezo-électrique. On l'implante avec une inclinaison ajustée de sa tête d'émission par rapport au plan de la surface 10 de la bande à inspecter 11 de manière à générer au sein de cette bande des ondes de Lamb se propageant dans le sens travers de la bande en direction d'une rive.

La roue 1 est montée sur un chariot mobile 5 pourvu d'un châssis 6 doté de trois roulettes 7, 8 et 9 disposées en triangle pour assurer une assise correcte du chariot lors du roulage sur la bande 11 à inspecter défilant dans le sens indiqué par les flèches rectilignes. Deux roulettes, 7 et 8, sont placées aux extrémités de la face frontale du châssis, la troisième, 9, est située en position médiane sur la face antérieure.

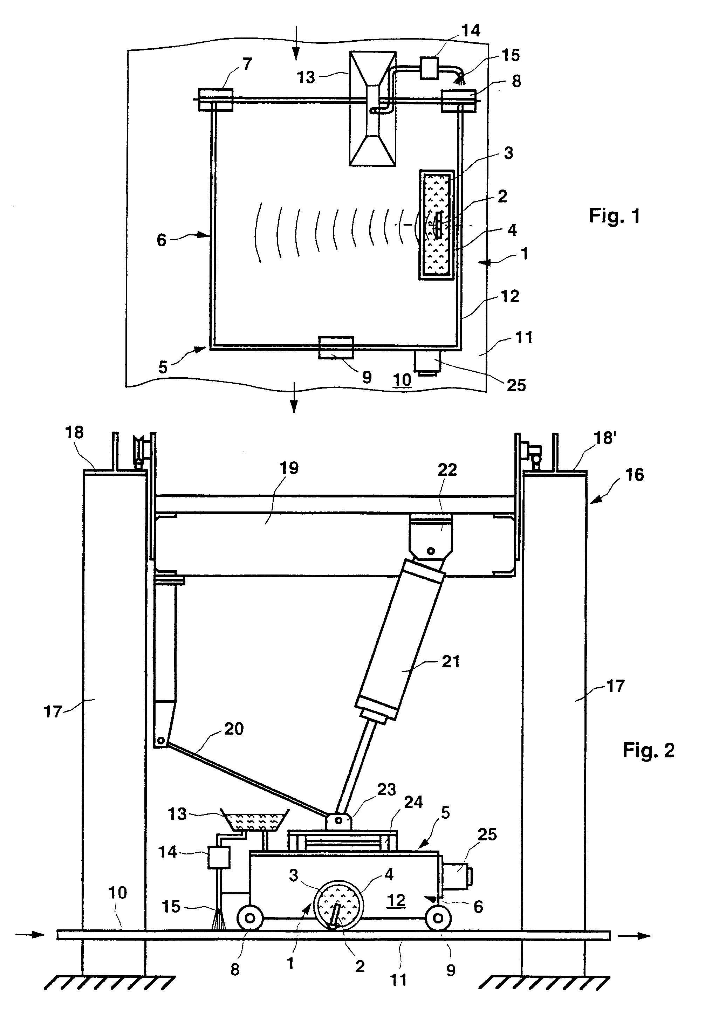

Comme on le voit, le montage de la roue palpeuse 1 sur le châssis a été ici déporté sur une face latérale 12 de celui-ci. Cette face latérale 12 est choisie comme étant celle qui sera voisine de la rive de la bande opposée de celle vers laquelle les trains d'ondes ultrasonores délivrées par le traducteur 2 seront dirigés. On comprend que ce déport représente une disposition particulièrement avantageuse permettant de balayer toute la largeur de bande 11, à l'épaisseur de la roue 1 près, pour peu que le chariot 5 soit positionné au plus près du bord de la bande, comme c'est le cas sur la figure 1.

Le diamètre de la roue palpeuse 1 est sensiblement supérieur à celui des roulettes, de sorte qu'elle dépasse volontairement vers le bas du chariot de plusieurs millimètres la limite des roulettes lorsque le chariot n'est pas en appui sur la bande.

L'équipement du chariot comprend également un réservoir embarqué 13 qui, par l'intermédiaire d'une servo-valve 14, alimente en fluide couplant perdu [à bonne propriété de mouillage de la surface en acier 10 (de l'huile minérale par exemple)] la conduite d'arrivée 15 destinée à délivrer un débit ajusté sur cette surface à l'endroit de passage de la roue palpeuse 1.

Un galet étaleur de ce fluide perdu, solidaire du chariot 5, est prévu sur la ligne de passage de la roue palpeuse 1 en amont de celle-ci dans le sens de défilement de la bande 11. Dans l'exemple de réalisation décrit, ce galet étaleur est avantageusement constitué par la roulette 8 elle-même.

Afin que l'aire d'étalement forcé de ce fluide mouillant soit compatible avec la taille de la zone de contact à venir de la roue 1 sur la bande, la largeur utile du galet 5 sera de préférence égale ou même supérieure à celle de l'enveloppe 4 de la roue compte tenu de sa déformation procurée par l'écrasement.

Le positionnement du chariot 5 sur la largeur de la bande 11 est assuré par un équipement de guidage 16 visible seulement sur la figure 2. Cet équipement comprend un portique 17 équipé de deux rails 18, 18' sur lesquels se déplace en translation un pont 19 dans le sens de la largeur de la bande 11. Ce pont supporte le chariot mobile 5 par l'intermédiaire d'une suspension pneumatique comprenant un bras articulé 20 et un vérin 21 dont l'extrémité supérieure est articulée sur une bride en "U" 22 fixée au pont 19, et dont l'autre extrémité rejoint l'extrémité du bras 20 en un même point d'attache sur une chape 23 située sur le sommet du chariot.

Le système de suspension assure un contact permanent et guidé du palpeur 1 avec la surface 10 de la bande à inspecter, tout en limitant l'effort exercé sur celle-ci à quelques kilogrammes par exemple. A cette fin, une contre-pression peut être insufflée dans le vérin pour compenser partiellement le poids du chariot 5.

La position du traducteur 2 sur la largeur de la bande 11 est réglable en déplaçant le chariot 5 en deux temps: d'abord par déplacement du pont 19, puis plus finement à l'aide d'un couple "vis-écrou" 24 entraîné par un moteur (non représenté) et assurant la liaison mécanique entre la chape 23 et le chariot 5 lui-même.

La distance entre le traducteur 2 et la surface de la bande 11 peut être comprise entre 5 et 15 mm par exemple, selon l'écrasement subi par l'enveloppe en élastomère 4 de la roue palpeuse. Cet écrasement peut être ajusté en insérant par exemple une cale d'épaisseur entre l'axe de la roue palpeuse 1 et le châssis du chariot qui le maintient de manière à régler le dépassement vers le bas de la roue hors des limites des roulettes.

Comme on le sait, la position angulaire d'un traducteur à ondes de Lamb, tel que le capteur 2, est définie par ses deux angles d'incidence mesurés par rapport à la normale à la surface de la bande à inspecter, l'un dans un plan parallèle à la direction de défilement et l'autre dans un plan perpendiculaire à cette direction. Classiquement, ces angles sont réglés respectivement de -20° à +20° et de 0 à 45°. Les réglages correspondants peuvent être effectués depuis l'extérieur de la roue 1 grâce à des systèmes vis-écrou habituels animés par un moteur pas à pas 25 embarqué sur le chariot lui-même.

Afin de conserver ces angles aussi constants que possible quels que soient les mouvements de la bande défilante 11 (ondulations, roulis, etc...), le chariot 5 est articulé à son point d'attache sur la chape 23 à la tige du vérin 20 selon deux axes perpendiculaires à la manière d'un cardan.

Comme on l'a déjà mentionné, dans l'exemple de réalisation représenté sur les figures, la roue palpeuse 1 est en position déportée sur un côté du cadre formant le châssis du chariot 5.

L'intérêt de cette disposition est double. D'abord, elle autorise une localisation de la roue en extrême rive de la bande de manière à pouvoir ainsi balayer la quasi-totalité de la largeur de la bande 11 par les trains d'ondes de Lamb émis par le traducteur. En outre, elle présente l'avantage de faire jouer à l'une des roulettes, ici la roulette 8, le rôle du galet étaleur présent en amont de la roue palpeuse 1, conformément à une caractéristique essentielle de l'invention.

L'effet d'étalement du fluide de mouillage couplant déversé par l'arrivée 15, et la régularité d'épaisseur du film étalé après passage sous le galet 8, se trouvent avantagés par le fait que le galet comporte une surface de contact avec la bande 11 rigide, indéformable et bien rectifiée. Dans ces conditions, une force d'appui modeste, de l'ordre du kg, suffit pour qu'en outre le galet force la pénétration du fluide de couplage dans les moindres aspérités de surface de la bande un peu à la manière d'un rouleau compresseur sur une chaussée fraîchement bitumée.

Les micro-poches d'air, qui auraient naturellement tendance à se laisser emprisonner dans les infractuosités de la surface 10 sous la pellicule de fluide de couplage, sont ainsi évitées grâce l'effet de chasse du passage du galet 8. Il en résulte un mouillage optimal de la surface par le couplant à l'interface roue -bande, qui est le garant de la mise en oeuvre de l'invention sur un produit en défilement rapide. L'invention peut ainsi être appliquée sans difficulté particulière à une bande d'acier en cours d'élaboration, par exemple à la sortie d'une ligne de décapage avant relaminage, alors qu'à cet endroit la vitesse du produit est classiquement de 400 à 600 m/mn.

On notera que le dispositif mono-traducteur décrit ci-avant permet de sonder jusqu'à 60 - 70% d'une bande de 120 cm de large, sachant que des zones d'extrémités sont de toutes façon inexploitables en raison des échos d'émission (25 cm environ) et des échos de rives (de 5 à 10 cm). Ce pourcentage peut être encore augmenté avec la mise en oeuvre de deux roues palpeuses placées l'une à la suite de l'autre, mais sur des rives différentes et émettant donc des trains d'ondes balayant la bande dans des sens opposés.

Il va de soi que l'invention n'est pas limité au dispositif exemplifié, mais s'étend à de multiples variantes ou équivalent dans la mesure où est respectée la définition de l'invention donnée par les revendications jointes.

En particulier, on notera que si le galet étaleur 8 est de préférence un rouleau, cette forme d'exécution n'est pas la seule possible. Un simple pinceau, ou un galet plat frotteur agissant alors à la manière d'un racleur à la surface de la bande pour étaler le fluide de couplage, pourront également convenir.

De même, la régularité des résultats de détection sera avantagée si l'on prend soin à ce que la viscosité du fluide de couplage acoustique déversé sur la bande soit constante. Cela signifie que l'on veillera à maintenir constante sa composition grâce à un réservoir 13 de capacité suffisante, de même que sa température, en prévoyant si nécessaire des moyens de chauffage régulés au sein du réservoir 13, par exemple.

L'invention s'applique non seulement aux bandes, plaques ou autres produits plats en défilement, mais également à tout produit quelque soit sa forme, dans la mesure où des faces planes délimitent la partie à sonder.

De même encore, si l'invention trouve son utilisation optimale pour les produits en acier en raison du faible amortissement des ondes de Lamb dans ce matériau, d'autres matières, métalliques par exemple comme le cuivre ou l'aluminium, ou même non-métalliques, peuvent également en bénéficier sans difficultés particulières dans la mesure où les éventuels défauts recherchés représentent des discontinuités acoustiques suffisantes au sein de la matière traversée par les ondes pour produire des échos répérables par le capteur.

Par ailleurs, l'invention n'est pas limitée à la mise en oeuvre d'ondes de Lamb, mais peut s'accomoder de l'utilisation de traducteurs ultrasonores à ondes guidées d'autre type employés pour l'inspection de produits en défilement relatif.

## Revendications

1. Appareil de détection acoustique de défauts dans un produit en défilement, tel qu'une bande d'acier (11) au cours de son élaboration, comprenant au moins un traducteur à ultra-sons par ondes guidées (2) logé à l'intérieur d'une roue palpeuse (1) en matière souple contenant un fluide de couplage acoustique et destinée à venir en contact roulant sur la surface du produit à inspecter, appareil **caractérisé en ce qu'**il présente, d'une part, un galet (8) de contact avec la surface (10) du produit (11) à inspecter, placé en amont de la roue palpeuse (1) dans la direction de défilement dudit produit, et, d'autre part, en amont dudit galet, une arrivée (15) contrôlée de fluide couplant perdu sur la surface (10) du produit défilant ayant des propriétés de mouillage de ladite surface.

2. Appareil de détection selon la revendication 1, **caractérisé en ce que** le galet (8) comporte une surface de contact bien rectifiée et non déformable pour pouvoir venir en appui sur la surface (10) du produit à inspecter.

3. Appareil selon la revendication 1 ou 2 **caractérisé en ce que** la largeur du galet est égale ou supérieure à celle de l'enveloppe (4) de la roue palpeuse (1) au contact du produit (11) à inspecter.

4. Appareil de détection selon la revendication 1, 2 ou 3, **caractérisé en ce que** le galet (8) est constitué d'un rouleau.

5. Appareil selon la revendication 1 **caractérisé en ce que** la roue palpeuse (1), son galet associé (8), et l'arrivée (15) de fluide de couplage mouillant sont montés sur un chariot mobile (5) destiné à rouler sur la surface (10) du produit défilant à inspecter (11), et **en ce que** des organes de support et de guidage (17, 18, 19, 20, 21) dudit chariot sont prévus qui déterminent sa position sur la largeur dudit produit.

6. Appareil selon la revendication 5 **caractérisé en ce que** le chariot mobile (5) est monté sur roulettes (7, 8, 9), et **en ce que** l'une desdites roulettes constitue le galet (8).

7. Appareil selon la revendication 5 **caractérisé en ce que** la roue palpeuse (1) est montée en position déportée sur le chariot (5).

8. Appareil selon la revendication 5 **caractérisé en ce que** le chariot (5) est pourvu d'un réservoir embarqué (13) relié à l'arrivée (15) et destiné à contenir le fluide de couplage mouillant perdu.

9. Appareil selon la revendication 5 ou 8, **caractérisé en ce que** une servo-valve (14) associée à l'arrivée (15) est prévue pour régler le débit de fluide de couplage mouillant à déverser devant le galet (5) sur la surface (10) du produit (11) à inspecter.

10. Appareil selon la revendication 5 **caractérisé en ce que** les organes de support et de guidage du chariot (8) comprennent des moyens (24) de réglage fin de la position du chariot sur la surface (10) du produit à inspecter (11).

## Claims

1. Apparatus for the acoustic detection of defects in a moving product, such as a steel strip (11) during its production, comprising at least one guided-wave ultrasonic transducer (2) housed inside a sensor wheel (1) made of flexible material, which contains an acoustic coupling fluid and is designed to come into running contact with the surface of the product to be inspected, which apparatus is **characterized in that** it has, on the one hand, a runner (8) for contact with the surface (10) of the product (11) to be inspected, placed upstream of the sensor wheel (1) in the direction of movement of the said product, and, on the other hand, upstream of the said runner, a controlled delivery (15) of lost coupling fluid onto the surface (10) of the moving product, this fluid having properties of wetting the said surface.

2. Detection apparatus according to Claim 1, **characterized in that** the runner (8) has a well-ground and non-deformable contact surface in order to be able to bear on the surface (10) of the product to be inspected.

3. Apparatus according to Claim 1 or 2, **characterized in that** the width of the runner is equal to or greater than that of the cover (4) of the sensor wheel (1) in contact with the product (11) to be inspected.

4. Detection apparatus according to Claim 1, 2 or 3, **characterized in that** the runner (8) consists of a roller.

5. Apparatus according to Claim 1, **characterized in that** the sensor wheel (1), its associated runner (8) and the delivery (15) of wetting coupling fluid are mounted on a movable carriage (5) designed to run over the surface (10) of the moving product (11) to be inspected and **in that** devices (17, 18, 19, 20, 21) for supporting and guiding the said carriage are provided which determine its position over the width of the said product.

6. Apparatus according to Claim 5, **characterized in that** the movable carriage (5) is mounted on casters (7, 8, 9) and **in that** one of the said casters constitutes the runner (8).

7. Apparatus according to Claim 5, **characterized in that** the sensor wheel (1) is mounted in an offset position on the carriage (5).

8. Apparatus according to Claim 5, **characterized in that** the carriage (5) is provided with an on-board reservoir (13) connected to the delivery means (15) and designed to contain the lost wetting coupling fluid.

9. Apparatus according to Claim 5 or 8, **characterized in that** a servovalve (14) associated with the delivery (15) is provided in order to adjust the flow of wetting coupling fluid to be discharged in front of the runner (8) onto the surface (10) of the product (11) to be inspected.

10. Apparatus according to Claim 5, **characterized in that** the devices for supporting and guiding the carriage (5) comprise means (24) for the fine adjustment of the position of the carriage on the surface (10) of the product (11) to be inspected.

## Patentansprüche

1. Vorrichtung zur akustischen Ermittlung von Fehlern in einem laufenden Gegenstand, insbesondere einem Stahlband (11) während seiner Herstellung, mit wenigstens einem Ultraschallsender (2) mit geführten Wellen, der im Inneren eines Prüfrades (1) aus weichem Material angeordnet ist, das ein akustisches Koppelfluid aufweist und das in Rollkontakt mit der Oberfläche des zu untersuchenden Gegenstandes steht, **dadurch gekennzeichnet, dass** sie einerseits eine Kontaktrolle (8) für die Oberfläche (10) des zu untersuchenden Gegenstandes (11) aufweist, die in Laufrichtung des Gegenstandes gesehen vor dem Prüfrad (1) angeordnet ist und andererseits vor dieser Rolle eine gesteuerte Zufuhranordnung (15) für ein verlorenes Koppelfluid auf die Oberfläche (10) des laufenden Gegenstandes aufweist, das Benetzungseigenschaften für die Oberfläche besitzt.

2. Vorrichtung zur Ermittlung nach Anspruch 1, **dadurch gekennzeichnet, dass** die Rolle (8) eine gerade und nicht verformbare Kontaktoberfläche aufweist, die sich auf der Oberfläche des (10) des zu untersuchenden Gegenstandes abstützt.

3. Vorrichtung nach Anspruch 1 oder 2, **dadurch gekennzeichnet, dass** die Breite der Rolle gleich oder grösser als diejenige der Hülle (4) des Prüfrades (1) bei Berührung mit dem zu untersuchenden Gegenstand (11) ist.

4. Vorrichtung zur Ermittlung nach Ansprüchen 1, 2 oder 3, **dadurch gekennzeichnet, dass** die Rolle (8) aus einer Walze besteht.

5. Vorrichtung nach Anspruch 1, **dadurch gekennzeichnet, dass** das Prüfrad (1), die ihm zugeordnete Rolle (8) und die Zufuhranordnung (15) für das benetzende Koppelfluid auf einem beweglichen Wagen (5) angeordnet sind, der auf der Oberfläche (10) des zu untersuchenden laufenden Gegenstandes (11) rollt und dass Halte- und Führungsanordnungen (17,18,19,20,21) für denn Wagen vorgesehen sind, die seine Stellung über die Breite des Gegenstandes bestimmen.

6. Vorrichtung nach Anspruch 5, **dadurch gekennzeichnet, dass** der bewegliche Wagen auf Walzen (7,8,9) angeordnet ist und dass eine der Walzen die Rolle (8) ist.

7. Vorrichtung nach Anspruch 5, **dadurch gekennzeichnet, dass** das Prüfrad (1) in einer versetzten Stellung auf dem Wagen (5) angeordnet ist.

8. Vorrichtung nach Anspruch 5, **dadurch gekennzeichnet, dass** der Wagen (5) mit einem eingebauten Behälter (13) versehen ist, der mit der Zufuhranordnung (15) verbunden ist und der das benetzende verlorene Koppelfluid enthält.

9. Vorrichtung nach Anspruch 5 oder 8, **dadurch gekennzeichnet, dass** ein der Zufuhranordnung (15) zugeordnetes Servo-Ventil (14) vorgesehen ist um die Menge an benetzendem vor der Rolle (8) auf die Oberfläche (10) des zu untersuchenden Gegenstandes (11) aufzubringendem Koppelfluids zu steuern.

10. Vorrichtung nach Anspruch 5, **dadurch gekennzeichnet, dass** die Halte- und Führungsanordnungen für den Wagen (5) eine Anordnung (24) zur Feineinstellung der Stellung des Wagens auf der Oberfläche (10) des zu untersuchenden Gegenstandes (11) aufweisen.
